# EUROPEAN PATENT APPLICATION

(11) **EP 4 644 708 A1**
(43) Date of publication of application: **05.11.2025**
(21) Application number: 25173678.1
(22) Date of filing: 30.04.2025
(51) Int. Cl.: F15B 11/16, B60T 8/17, B60T 8/32, B60T 17/04, F15B 21/04, F15B 21/042, F15B 21/044, B60T 13/16, B64C 25/42, F15B 15/14

(54) **AIRCRAFT SYSTEM**

(30) Priority: 30.04.2024 GB 202406040
(71) Applicant: Airbus Operations Limited, Bristol BS34 7PA (GB)
(72) Inventor: WILLIAMS, David, Bristol, BS34 7PA (GB); KERR, Sean, Bristol, BS34 7PA (GB)
(74) Representative: EIP

(57) **Abstract**

Disclosed is an aircraft system including a hydraulic actuator, an inlet line for supplying hydraulic fluid to the hydraulic actuator, an outlet line for removing hydraulic fluid from the hydraulic actuator, a first one-way valve configured to allow fluid flow along the inlet line in a direction toward the hydraulic actuator, and a second one-way valve configured to allow fluid flow along the outlet line in a direction away from the hydraulic actuator.

## Description

### TECHNICAL FIELD

The present invention relates to an aircraft system comprising a hydraulic actuator, a hydraulic actuator, and an aircraft comprising such an aircraft system and/or such a hydraulic actuator.

### BACKGROUND

Many aircraft systems employ hydraulic actuators to impart a force to other components of the aircraft system. For example, some aircraft braking systems employ hydraulic actuators to impart a braking force to a wheel of an aircraft, and some aircraft landing gear extension and retraction systems (LGERS) employ hydraulic actuators to extend and retract landing gear of an aircraft.

### SUMMARY

A first aspect of the present invention provides an aircraft system comprising: a hydraulic actuator; an inlet line for supplying hydraulic fluid to the hydraulic actuator; an outlet line for removing hydraulic fluid from the hydraulic actuator; a first one-way valve configured to allow fluid flow along the inlet line in a direction toward the hydraulic actuator; and a second one-way valve configured to allow fluid flow along the outlet line in a direction away from the hydraulic actuator.

By providing both the inlet line and the outlet line, fluid recirculation through the hydraulic actuator may be achieved. For example, fluid can circulate through a chamber of the hydraulic actuator, with both the inlet line and the outlet line in fluid communication with the chamber. This may be in contrast to known hydraulic actuators in aircraft systems, for example such as aircraft brake systems, which typically present a dead volume which does not see any refreshing of the hydraulic fluid during normal operation. By providing fluid recirculation through the hydraulic actuator, aging of hydraulic fluid may be distributed more widely through an aircraft hydraulic system, which may mean that such aging is more likely to be picked up by sampling of hydraulic fluid in the aircraft hydraulic system. This may lead to a more predictable and/or more reliable state of hydraulic fluid in the aircraft system. Fluid recirculation may also provide improved thermal cycling, for example with a reduction in temperature of hydraulic fluid contained within the aircraft system in use.

Provision of the first and second one-way valves may facilitate fluid recirculation through the hydraulic actuator. For example, the second one-way valve may inhibit, when hydraulic fluid is received by the inlet line from a pressure source of hydraulic fluid hydraulic fluid, hydraulic fluid from passing along the outlet line toward the hydraulic actuator. The first one-way valve may inhibit hydraulic fluid from exiting the hydraulic actuator along the inlet line.

The aircraft system may comprise a pressure source for providing hydraulic fluid to the inlet line. The inlet line may be in fluid communication with the pressure source. The aircraft system may comprise a reservoir for receiving hydraulic fluid from the outlet line. The outlet line may be in fluid communication with the reservoir.

The hydraulic actuator may comprise an inlet port in fluid communication with the inlet line, and an outlet port in fluid communication with the outlet line. The inlet port may be located on a first side of the hydraulic actuator, and the outlet port may be located on a second side of the hydraulic actuator, the second side of the hydraulic actuator different from the first side of the hydraulic actuator. This may provide a relatively simpler internal routing of hydraulic fluid through the hydraulic actuator, for example from one side to another, compared to a hydraulic actuator where the inlet port and the outlet port are located on a same side of the hydraulic actuator.

The first side of the hydraulic actuator may be configured such that, when the aircraft system is mounted within an aircraft in use, and with the aircraft located on a horizontal surface, the first side of the hydraulic actuator is located below the second side of the hydraulic actuator. The hydraulic actuator may be configured such that, when the aircraft system is mounted within an aircraft in use, and with the aircraft located on a horizontal surface, the inlet port is located at a bottom of the hydraulic actuator, and the outlet port is located at a top of the hydraulic actuator. In such a manner any bubbles of air located within hydraulic fluid contained within the hydraulic actuator in use may be encouraged to move toward the outlet port. This, in combination with the fluid recirculation described above, may enable the aircraft system to be self-bleeding, with bubbles of air contained within the hydraulic fluid within the hydraulic actuator in use able to be passed from the hydraulic actuator along the outlet line. Such a self-bleeding mechanism may enable the aircraft system to have longer maintenance free periods.

The aircraft system may be configured such that hydraulic fluid flowing along the inlet line toward the hydraulic actuator causes activation of the hydraulic actuator, and such that hydraulic fluid flowing along the outlet line away from the hydraulic actuator causes deactivation of the hydraulic actuator. This may provide a relatively simple and/or inexpensive mechanism for achieving recirculation of hydraulic fluid within the hydraulic system, for example in comparison to an arrangement that requires a pump to pump hydraulic fluid along the outlet line in use.

The aircraft system may comprise a control valve for controlling flow of hydraulic fluid along the inlet line. This may enable selective flow of hydraulic fluid along the inlet line. The control valve may be a servo valve or a proportional valve. The control valve may be configured such that application of a control signal to the control valve causes hydraulic flow to flow along the inlet line toward the hydraulic actuator, and such that removal of the control signal from the control valve causes hydraulic fluid to flow along the outlet line away from the hydraulic actuator. The control valve may be configured such that such that removal of the control signal from the control valve causes hydraulic fluid to flow along the outlet line away from the hydraulic actuator, and through the control valve, for example toward and/or into the reservoir.

The inlet line and the outlet line may be fluidically coupled to the control valve. This may provide for a simpler and/or less expensive arrangement that a system where the inlet line and the outlet line are coupled to individual valves.

The inlet line and the outlet line may be coupled to the control valve by a common conduit. This may provide for a simpler and/or less expensive arrangement that a system where the inlet line and the outlet line are coupled to the control valve by separate conduits.

The common conduit may have a first volume, the aircraft system may be configured such that a second, maximal, volume of hydraulic fluid is able to be displaced along the outlet line by the hydraulic actuator in a single actuation, and the first volume may be less than the second volume. By having the first volume less than the second volume, recirculation of hydraulic fluid from the outlet line may be encouraged. For example, if the first volume were greater than the second volume, there may be a risk that hydraulic fluid would simply sit in the common conduit, instead of passing through the control valve, and that upon next activation of the hydraulic actuator the same hydraulic fluid would pass along the inlet line toward the hydraulic actuator. In contrast, by having the first volume less than the second volume, hydraulic fluid from the outlet line is encouraged to pass through the common conduit and through the control valve.

The hydraulic actuator may comprise a plurality of pistons movable between a retracted position and an extend position. Each piston may be biased towards the retracted position. Each piston may be configured such that hydraulic fluid flowing along the inlet line causes the piston to move from its retracted position toward its extended position, for example with the pistons configured to act in parallel. The hydraulic actuator may comprise a chamber located on one side of each of the pistons, and the inlet line and the outlet line may be in fluid communication with the chamber. The hydraulic actuator may comprise a single acting hydraulic actuator.

The hydraulic actuator may comprise a first chamber and a first piston movable in response to movement of hydraulic fluid within the first chamber, the inlet line and the outlet line in fluid communication with the first chamber. The hydraulic actuator may comprise a second chamber and a second piston movable in response to movement of hydraulic fluid within the second chamber. The aircraft system may comprise a further inlet line for supplying hydraulic fluid to the second chamber; a further outlet line for removing hydraulic fluid from the second chamber; a first further one-way valve configured to allow fluid flow along the further inlet line in a direction toward the second chamber; and a second further one-way valve configured to allow fluid flow along the outlet line in a direction away from the second chamber. This may provide a dual cavity arrangement, which may provide for redundancy for the hydraulic actuator.

The aircraft system may comprise a first hydraulic system comprising a first pressure source for supplying hydraulic fluid to the inlet line, a first reservoir for receiving fluid from the outlet line, and a first control valve for controlling flow of hydraulic fluid along the inlet line and the outlet line. The inlet line and the outlet line may be connected to the first control valve by a first common conduit. The first common conduit may have a first volume, the aircraft system may be configured such that a second volume of hydraulic fluid is configured to pass through the first common conduit from the outlet line in response to deactivation of the first piston, and the first volume may be less than the second volume.

The aircraft system may comprise a second hydraulic system comprising a second pressure source for supplying hydraulic fluid to the further inlet line, a second reservoir for receiving fluid from the further outlet line, and a second control valve for controlling flow of hydraulic fluid along the further inlet line and the further outlet line. The further inlet line and the further outlet line may be connected to the second control valve by a second common conduit. The second common conduit may have a first volume, the aircraft system may be configured such that a second volume of hydraulic fluid is configured to pass through the second common conduit from the further outlet line in response to deactivation of the second piston, and the first volume may be less than the second volume.

The aircraft system may comprise a first hydraulic system comprising a first pressure source, a first reservoir, and a first control valve for controlling flow of hydraulic fluid from the first pressure source to the inlet line, and for controlling flow of hydraulic fluid from the outlet line to the first reservoir. The aircraft system may comprise a second hydraulic system comprising a second pressure source, a second reservoir, and a second control valve for controlling flow of hydraulic fluid from the first pressure source to the inlet line, and for controlling flow of hydraulic fluid from the outlet line to the first reservoir. The aircraft may comprise a selector for selecting which of the first and second hydraulic systems is in fluid communication. This may provide for redundancy without the need to provide a further inlet line and a further outlet line.

The selector may comprise a shuttle valve. The inlet line and the outlet line may be coupled to the shuttle valve by a common conduit. The first control valve may be coupled to the shuttle valve by a first conduit, and the second control valve may be coupled to the shuttle valve by a second conduit. A total volume of the common conduit, the first conduit, and the second conduit, may be less than a volume of hydraulic fluid configured to be displaced from within the hydraulic actuator during deactivation of the hydraulic actuator in use.

The selector may comprise a first shuttle valve connected between the first and second control valves and in fluid communication with the inlet line, and a second shuttle valve connected between the first and second control valves and in fluid communication with the outlet line. This may split flow through the inlet line and the outlet line between the first and second shuttle valves. The first and second shuttle valves may be coupled to the first control valve by a first common conduit, and the first and second shuttle valves may be coupled to the second control valve by a second common conduit. A total volume of the first and second shuttle valves may be less than a volume of hydraulic fluid configured to be displaced from within the hydraulic actuator during deactivation of the hydraulic actuator in use.

The aircraft system may comprise a first control valve for controlling flow of hydraulic fluid along the inlet line, and a second control valve for controlling flow of hydraulic fluid along the outlet line. This may enable hydraulic fluid to be circulated where a primary function of the hydraulic actuator is not in use.

The aircraft system may comprise a first hydraulic system comprising a first pressure source in fluid communication with the first control valve, a first reservoir in fluid communication with the second control valve, and the first and second control valves. The aircraft system may comprise a second hydraulic system comprising a second pressure source, a second reservoir, a first further control valve for controlling flow hydraulic fluid from the second pressure source to the inlet line, and a second further control valve for controlling flow of hydraulic fluid from the outlet line to the second reservoir. The aircraft system may comprise a first selector valve for selecting which of the first control valve and the first further control valve is in fluid communication with the inlet line. The aircraft system may comprise a second selector valve for selecting which of the second control valve and the second further control valve is in fluid communication with the outlet line. Such an aircraft system may enable hydraulic fluid to be circulated where a primary function of the hydraulic actuator is not in use whilst also enabling redundancy in the event of one of the first and second hydraulic systems being inoperable and/or operating with reduced functionality.

The hydraulic actuator may comprise a first chamber, a second chamber, and a piston movable in response to hydraulic fluid flowing through the first and second chambers, wherein the inlet line and the outlet line are in fluid communication with the first chamber, and the aircraft system may comprise: a further inlet line for supplying hydraulic fluid to the second chamber; a further outlet line for removing hydraulic fluid from the second chamber; a first further one-way valve configured to allow fluid flow along the further inlet line in a direction toward the second chamber; and a second further one-way valve configured to allow fluid flow along the outlet line in a direction away from the second chamber. This may allow for recirculation of hydraulic fluid in both the first and second chambers. The hydraulic actuator may comprise a double-acting hydraulic actuator.

The aircraft system may comprise a first hydraulic system comprising a first pressure source for supplying hydraulic fluid to the inlet line, a first reservoir for receiving fluid from the outlet line, and a first control valve for controlling flow of hydraulic fluid along the inlet line and the outlet line. The inlet line and the outlet line may be connected to the first control valve by a first common conduit. The first common conduit may have a volume larger than a maximal volume of hydraulic fluid that is able to be displaced along the outlet line by movement of the piston in a single actuation.

The aircraft system may comprise a second hydraulic system comprising a second pressure source for supplying hydraulic fluid to the further inlet line, a second reservoir for receiving fluid from the further outlet line, and a second control valve for controlling flow of hydraulic fluid along the further inlet line and the further outlet line. The further inlet line and the further outlet line may be connected to the second control valve by a second common conduit. The second common conduit may have a volume larger than a maximal volume of hydraulic fluid that is able to be displaced along the further outlet line by movement of the piston in a single actuation.

The aircraft system may be an aircraft brake system, and the hydraulic actuator may be a hydraulic brake actuator. Typical hydraulic brake actuators may present a dead volume which does not see any refreshing of the hydraulic fluid during normal operation. Implementing fluid recirculation in an aircraft brake system may distribute aging of hydraulic fluid more widely through an aircraft hydraulic system, and may also provide improved thermal cycling, in the manner previously described. The control valve may be operable in response to a braking signal, for example a braking signal received in response to a braking input command received from a pilot of an aircraft in use.

The aircraft system may comprise an aircraft brake, and the aircraft system may be configured such that hydraulic fluid flowing along the inlet line toward the hydraulic actuator causes activation of the hydraulic actuator such that a level of braking force applied by the aircraft brake increases, and such that hydraulic fluid flowing along the outlet line away from the hydraulic actuator causes deactivation of the hydraulic actuator such that the level of braking force applied by the aircraft brake decreases.

The aircraft brake may comprise a multi-disk brake. The aircraft system may comprise a wheel, and the aircraft brake may be configured to selectively apply a braking force to the wheel in response to activation of the hydraulic actuator.

A second aspect of the present invention provides a hydraulic actuator for an aircraft system, the hydraulic actuator comprising an inlet port for fluid communication with an inlet line for supplying hydraulic fluid to the hydraulic actuator, and an outlet port for fluid communication with an outlet line for removing hydraulic fluid from the hydraulic actuator, the inlet port located on a first side of the hydraulic actuator, and the outlet port located on a second side of the hydraulic actuator, the second side of the hydraulic actuator different from the first side of the hydraulic actuator.

The first side of the hydraulic actuator may be configured such that, when the hydraulic actuator is mounted within an aircraft in use, and with the aircraft located on a horizontal surface, the first side of the hydraulic actuator is located below the second side of the hydraulic actuator.

The hydraulic actuator may be configured such that, when the hydraulic actuator is mounted within an aircraft in use, and with the aircraft located on a horizontal surface, the inlet port is located at a bottom of the hydraulic actuator, and the outlet port is located at a top of the hydraulic actuator.

A third aspect of the present invention provides an aircraft comprising the aircraft system according to the first aspect of the present invention, or the hydraulic actuator according to the second aspect of the present invention.

Optional features of aspects of the present invention may be equally applied to other aspects of the present invention, where appropriate.

### BRIEF DESCRIPTION OF THE DRAWINGS

Embodiments of the invention will now be described, by way of example only, with reference to the accompanying drawings, in which:
Figure 1 shows a schematic view of an aircraft;
Figure 2 shows a schematic view of a first example aircraft braking system;
Figure 3 shows a schematic view of a piston of a hydraulic brake actuator;
Figure 4 shows a schematic view of a second example aircraft braking system;
Figure 5 shows a schematic view of a third example aircraft braking system;
Figure 6 shows a schematic view of a fourth example aircraft braking system;
Figure 7 shows a schematic view of a fifth example aircraft braking system;
Figure 8 shows a schematic view of a sixth example aircraft braking system; and
Figure 9 shows a schematic view of a seventh example aircraft braking system;

### DETAILED DESCRIPTION

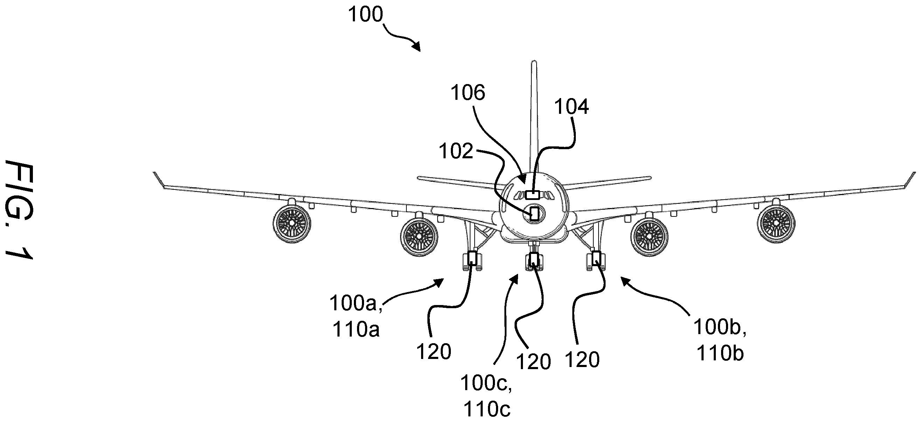

An aircraft 100 is shown in Figure 1. The aircraft 100 comprises two main landing gears ('MLGs') 100a,100b and a nose landing gear ('NLG') 100c, each comprising plural respective wheels 110a-110c. Each wheel 110a-b of the MLGs 100a,100b comprises a brake 120 configured to apply braking forces to the respective wheels 110a-110b. In the present example, the wheels 110c of the NLG 100c do not comprise respective brakes. In other examples, the wheels 110c of the NLG 100c also comprise brakes.

The aircraft 100 further comprises a controller 102 in communication with a brake lever 104 disposed in a cockpit 106 of the aircraft. The controller 102 is configured to provide a braking signal in response to actuation of the brake lever 104 by a pilot in use of the aircraft 100.

The brakes 120 of the aircraft 100 are hydraulically operated disc brakes, each comprising a stack of rotor and stator discs positioned within the hub of the respective wheel 110a-b. In use, the rotor and stator discs are forced together by a hydraulic brake actuator, as will be described in more detail hereinafter, to develop a friction force between the rotor and stator discs.

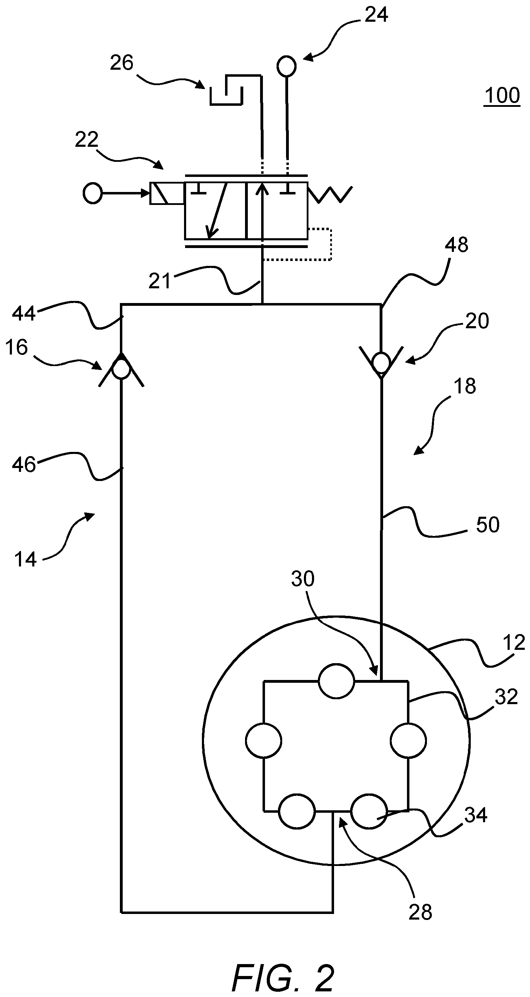

A first example aircraft braking system 10 used to actuate the brakes is illustrated schematically in Figure 2. It will be appreciated that in some examples each wheel 110a-b may have its own aircraft braking system, whilst in other examples components of the aircraft braking system may be shared amongst the wheels 110a-b of the MLG 100a-b.

The aircraft braking system 10 comprises a hydraulic brake actuator 12, an inlet line 14, a first one-way valve 16, an outlet line 18, and a second one-way valve 20. In the specific example of Figure 2 the aircraft braking system 10 also comprises a common conduit 21, a servo valve 22, a pressure source 24, and a reservoir 26. It will be appreciated that the brake 120 and the relevant wheel 110a-b can also be considered to form part of the aircraft braking system 10. In some examples, the common conduit 21 can form part of the servo valve 22, for example being located within a housing of the servo valve 22.

The hydraulic brake actuator 12 comprises an inlet port 28, an outlet port 30, an internal flow path 32, and five pistons 34. The inlet port 28 is located on an upper side 36 of the hydraulic brake actuator 12, and the outlet port 30 is located on a lower side 38 of the hydraulic brake actuator 12. The inlet port 28 is therefore located below the outlet port 30 when the hydraulic actuator is located in the orientation shown in Figure 1. Such an orientation may correspond to an orientation when an aircraft 100 that includes the aircraft braking system 10 is located on a horizontal surface, such as a runway, in use.

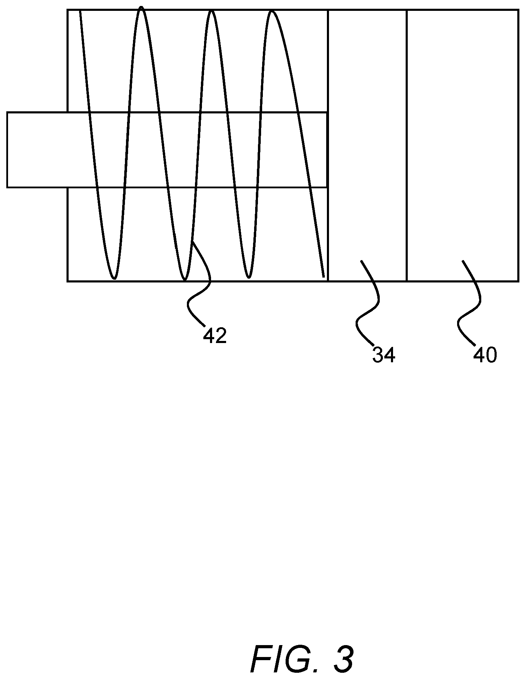

The internal flow path 32 is in fluid communication with each of the inlet port 28 and the outlet port 30 and defines a respective chamber 40 within which a respective piston 34 is located, as illustrated schematically in Figure 3. Each piston 34 is movable within its chamber 40 in response to flow of hydraulic fluid through the internal flow path 32, as will be discussed in further detail hereinafter. Each piston 34 is biased toward a rest configuration, in which a volume of hydraulic fluid located within the respective chamber 40 is at a minimum, by a spring 42. Each piston 34 within the hydraulic brake actuator 12, or even the hydraulic brake actuator 12 itself, can be thought of as a single-acting actuator.

The inlet line 14 is formed by a first conduit 44 connected in fluid communication with the common conduit 21 and the first one-way valve 16, and a second conduit 46 connected in fluid communication with the first one-way valve 16 and the inlet port 28. It will be appreciated that greater or fewer conduits may be used to form the inlet line 14 in practice.

The first one-way valve 16 is a check valve that is orientated to allow fluid flow from the common conduit 21 in a direction along the inlet line 14 toward the inlet port 28 of the hydraulic brake actuator 12, and to inhibit fluid flow in an opposite direction along the inlet line 14 away from the hydraulic brake actuator 12.

Similarly, the outlet line 18 is formed by a third conduit 48 connected in fluid communication with the common conduit 21 and the second one-way valve 20, and a fifth conduit 50 connected in fluid communication with the second one-way valve 20 and the outlet port 30. It will be appreciated that greater or fewer conduits may be used to form the outlet line 18 in practice.

The second one-way valve 20 is a check valve that is orientated to allow fluid flow from the outlet port 30 of the hydraulic brake actuator 12 in a direction away from the hydraulic brake actuator 12 toward the common conduit 21, and to inhibit fluid flow in a direction along the outlet line in a direction toward the outlet port 30 of the hydraulic brake actuator 12.

The common conduit 21 is coupled to the servo valve 22, and is in fluid communication with each of the first conduit 44 of the inlet line 14, and the third conduit 48 of the outlet line 18. The common conduit 21 has a volume that is smaller than a maximal volume of hydraulic fluid that can be displaced along the outlet line 18 in response to deactivation of the hydraulic actuator 12, and is configured to carry bidirectional flow of hydraulic fluid in use, as will be discussed in further detail hereinafter. In other examples, the common conduit 21 can be incorporated within a housing of the servo valve 22.

The servo valve 22 is fluidically connected to each of the common conduit 21, the pressure source 24, and the reservoir 26. The servo valve is configured to receive a control signal from an aircraft brake pedal, and is configured to control flow of hydraulic fluid from the pressure source 24 along the inlet line 14, and from the outlet line 18 into the reservoir 26, as will be discussed in more detail hereinafter. The service valve 22 can be considered a control valve in the context of the present application.

The pressure source 24 comprises a pump configured to pump hydraulic fluid toward the servo valve 22, and along the inlet line 14, in use. In some examples the pump is in fluid communication with the reservoir 26.

The reservoir 26 is a container configured to retain hydraulic fluid therein.

In use of the aircraft 100, a pilot applies a force to the brake lever 104 to indicate a desired braking level to be applied, which results in a control signal being sent to the controller 102. The controller 102 then sends a braking signal to the servo valve 22, and the servo valve operates to place the pressure source 24 in fluid communication with the common conduit 21. The pressure source 24 then causes hydraulic fluid to flow through the common conduit 21 and along the inlet line 14 toward the hydraulic brake actuator 12. The flow of hydraulic fluid along the inlet line 14 is sufficient to overcome a cracking pressure of the first one-way valve 16, such that the hydraulic fluid flowing along the inlet line 14 is able to pass through the inlet port 28 and into the internal flow path 32 of the hydraulic brake actuator 12.

As hydraulic fluid flows along the internal flow path 32 of the hydraulic brake actuator 12, the hydraulic fluid causes each piston 34 to move within its respective chamber 40, against the action of the respective spring 42. The pistons 34 force together the rotor and stator discs of the brake 120 to develop a friction force between the rotor and stator discs, leading to braking of the relevant wheel 110a-b.

While hydraulic fluid is flowing down the inlet line 14, the second one-way valve 20 inhibits hydraulic fluid from flowing down the outlet line 18 in a direction toward the hydraulic brake actuator 12. Hydraulic fluid is also inhibited from flowing along the outlet line 18 in a direction away from the hydraulic brake actuator 12 by a pressure difference across the second one-way valve 20.

When the pilot releases an applied force on the brake lever 104, or applies a force to the brake lever in an opposite direction to a previously applied force, to indicate a reduction in a desired braking level to be applied, for example no braking level to be applied, a new or modified control signal is sent to the controller 102. The controller 102 then sends a new or modified braking signal to the servo valve 22, and the servo valve 22 operates to place the reservoir 26 in fluid communication with the common conduit 21.

As the pressure source 24 is no longer driving fluid along the internal flow path 32 of the hydraulic brake actuator 12, the springs 42 cause the respective pistons 34 toward their rest configurations within the respective chambers 40. As the pistons move within the chambers 40, hydraulic fluid is displaced from the chambers 40. The first one-way-valve 16 inhibits flow of hydraulic fluid along the inlet line 14 in a direction away from the hydraulic brake actuator 12, and hence hydraulic fluid is inhibited from leaving the hydraulic brake actuator 12 through the inlet port 28.

The second one-way valve 20, however, enables flow of hydraulic fluid along the outlet line 18 in a direction away from the hydraulic brake actuator 12. Hydraulic fluid thereby leaves the hydraulic brake actuator 12 through the outlet port 30, and passes along the outlet line 18 toward the common conduit 21. Hydraulic fluid is inhibited from flowing along the inlet line 14 in a direction toward from the hydraulic brake actuator 12 by a pressure difference across the first one-way valve 16. Thus the hydraulic fluid passes through the common conduit 21 and the servo valve 22, and toward the reservoir 26. As the common conduit 21 has a volume that is smaller than a maximal volume of hydraulic fluid that can be displaced along the outlet line 18 in response to deactivation of the hydraulic actuator 12, hydraulic fluid passes through the common conduit21 toward the reservoir 26.

In such a manner fluid recirculation through the hydraulic brake actuator 12 can be achieved. For example, fluid can circulate through the internal flow path 32 of the hydraulic actuator, with both the inlet line 14 and the outlet line 18 in fluid communication with the internal flow path 32. This may be in contrast to known hydraulic brake actuators in aircraft braking systems, which typically present a dead volume which does not see any refreshing of the hydraulic fluid during normal operation. By providing fluid recirculation through the hydraulic brake actuator 12, aging of hydraulic fluid may be distributed more widely through the aircraft braking system 10, which may mean that such aging is more likely to be picked up by sampling of hydraulic fluid in the aircraft braking system 10. This may lead to a more predictable and/or more reliable state of hydraulic fluid in the aircraft braking system 10. Fluid recirculation may also provide improved thermal cycling, for example with a reduction in temperature of hydraulic fluid contained within the aircraft braking system 10 in use.

Furthermore, as the inlet port 28 of the hydraulic brake actuator 12 is located at a bottom of the hydraulic brake actuator 12, and the outlet port 30 of the hydraulic brake actuator 12 is located at a top of the hydraulic brake actuator 12, any bubbles of air within hydraulic fluid in the hydraulic brake actuator 12 are encouraged to move toward the outlet port 30. Such bubbles of air are then evacuated along the outlet line 18 when hydraulic fluid is allowed to pass along the outlet line 18 in use, thereby providing a self-bleeding mechanism for the hydraulic brake actuator 12. This may provide for enhanced performance of the hydraulic brake actuator 12, and may require less maintenance, for example fewer bleeding operations, then a typical hydraulic brake actuator.

Although described above as occurring in response to activation of the brake lever 104 by a pilot, it will be appreciated that in other examples another controller of the aircraft 100 can provide a control signal to the controller 102, or that the controller 102 can itself determine the braking signal based on one or more received sensor inputs. For example, the aircraft may comprise an anti-skid detection system, and the controller 102 may be configured to determine an appropriate braking signal to provide anti-skid control to the relevant brake(s).

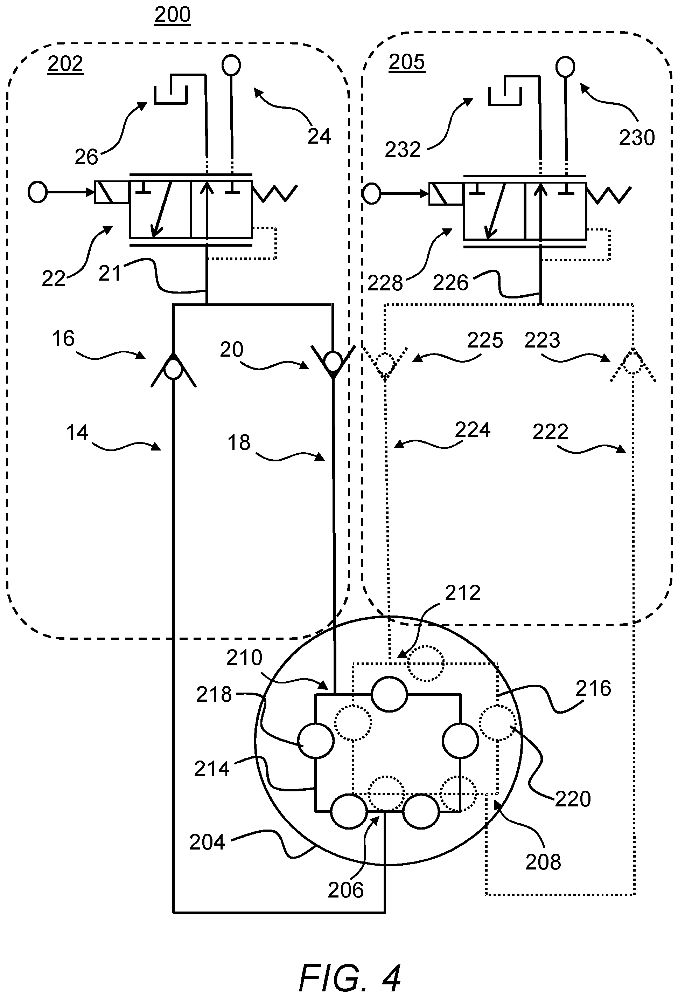

A second example aircraft braking system 200 used to actuate the brakes is illustrated schematically in Figure 4. The second example aircraft braking system 200 comprises a first hydraulic loop 202 having all the features of the first example aircraft braking system 10, save for a different hydraulic brake actuator 204 and like reference numerals are used in Figure 4 for sake of clarity. The hydraulic brake 204 of the second example aircraft braking system 200 comprises first 206 and second 208 inlet ports, first 210 and second 212 outlet ports, first 214 and second 216 internal flow paths, and first 218 and second 220 sets of pistons.

The first inlet port 206 is located at the bottom of the hydraulic brake actuator 204, and the first outlet port 210 is located at the top of the hydraulic brake actuator 204. The first inlet port 206 and the first outlet port 210 are in fluid communication with the first internal flow path 214, and the first set 218 of pistons are each movable in response to flow of hydraulic fluid within a respective individual chamber against the action of a spring. The inlet line 14 of the first hydraulic loop 202 is connected in fluid communication with the first inlet port 206, whilst the outlet line 18 of the first hydraulic loop 202 is connected in fluid communication with the first outlet port 210.

The second inlet port 208 is located at the bottom of the hydraulic brake actuator 204, and the second outlet port 212 is located at the top of the hydraulic brake actuator 204. The second inlet port 208 and the second outlet port 212 are in fluid communication with the second internal flow path 216, and the second set 220 of pistons are each movable in response to flow of hydraulic fluid within a respective individual chamber against the action of a spring. The hydraulic brake actuator 204 can be thought of as a dual cavity hydraulic brake actuator.

The second example aircraft braking system 200 also comprises a second hydraulic loop 205 comprising a further inlet line 222, a first further one-way valve 223, a further outlet line 224, a second further one-way valve 225, a further common conduit 226, a further servo valve 228, a further pressure source 230, and a further reservoir 232. Details of components of the second hydraulic loop 205 are the same as the corresponding components of the first hydraulic loop 202, and so will not be described here for sake of brevity, save for the following.

The further inlet line 222 of the second hydraulic loop 205 is connected in fluid communication with the second inlet port 208, whilst the further outlet line 224 of the second hydraulic loop 205 is connected in fluid communication with the second outlet port 212.

In use of the second example aircraft braking system 200, either the servo valve 22 of the first hydraulic loop 202, or the further servo valve 228 of the second hydraulic loop 205, can receive a braking signal from the controller 102 of the aircraft. This leads to operation of either the first hydraulic loop 202 to actuate the first set 218 of pistons, or the second hydraulic loop 205 to actuate the second set 220 of pistons, with operation occurring in the manner described for the first example aircraft braking system 10 above.

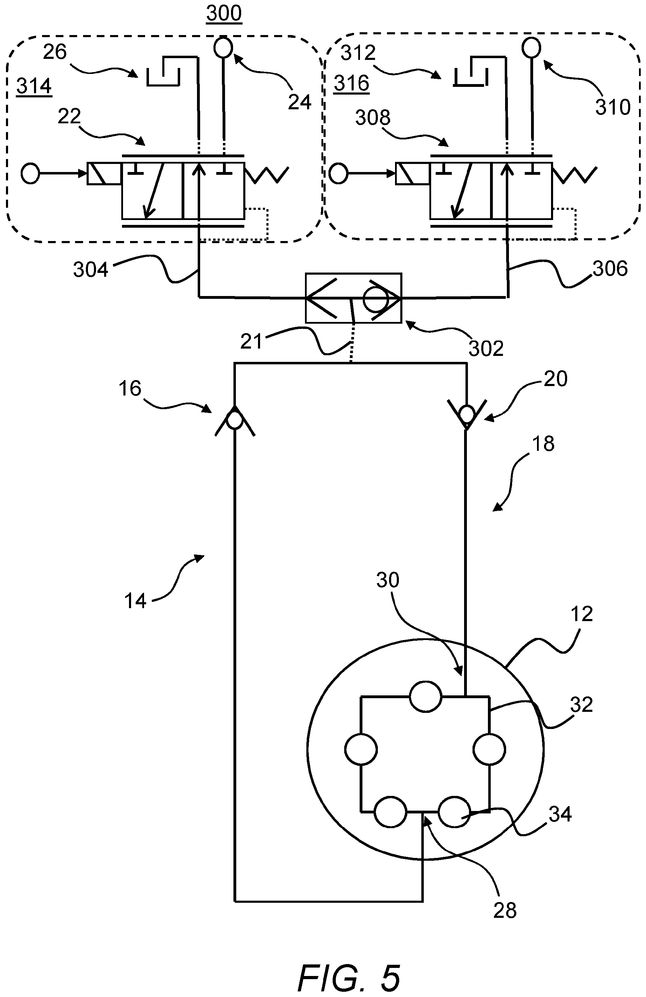

A third example aircraft braking system 300 used to actuate the brakes is illustrated schematically in Figure 5. The third example aircraft braking system 300 is substantially the same as the first example aircraft braking system 10, save that the third example aircraft braking system 300 comprises a shuttle valve 302, a first connecting conduit 304, a second connecting conduit 306, a further servo valve 308, a further pressure source 310, and a further reservoir 312. Like reference numerals in Figure 5 are used for sake of clarity.

In the third example aircraft braking system 300, the servo valve 22, the pressure source 24, and the reservoir 26, can be considered to form a first hydraulic system 314, whilst the further servo valve 308, the further pressure source 310, and the further reservoir 312, can be considered to form a second hydraulic system 316. The servo valve 22 is fluidically coupled to the shuttle valve 302 by the first connecting conduit 304, and the further servo valve 308 is fluidically coupled to the shuttle valve 302 by the second connecting conduit 306. The common conduit 21 is fluidically coupled to the shuttle valve 302. A total volume of the common conduit 21, the shuttle valve 302, and the first 304 and second 306 connecting conduits, is less than a maximal volume of hydraulic fluid that can be displaced along the outlet line 18 in response to deactivation of the hydraulic actuator 12.

In use of the third example hydraulic system 300, the shuttle valve 302 determines which of the first 314 and second 316 hydraulic systems is in fluid communication with the common conduit 21, and hence which of the first 314 and second 316 hydraulic systems is in fluid communication with either the inlet line 14 or the outlet line 18. The shuttle valve 302 can therefore be thought of as a selector that selects between the first 314 and second 316 hydraulic systems. Such an arrangement can provide redundancy in the event that one of the first 314 and second 316 hydraulic systems is unavailable for operation.

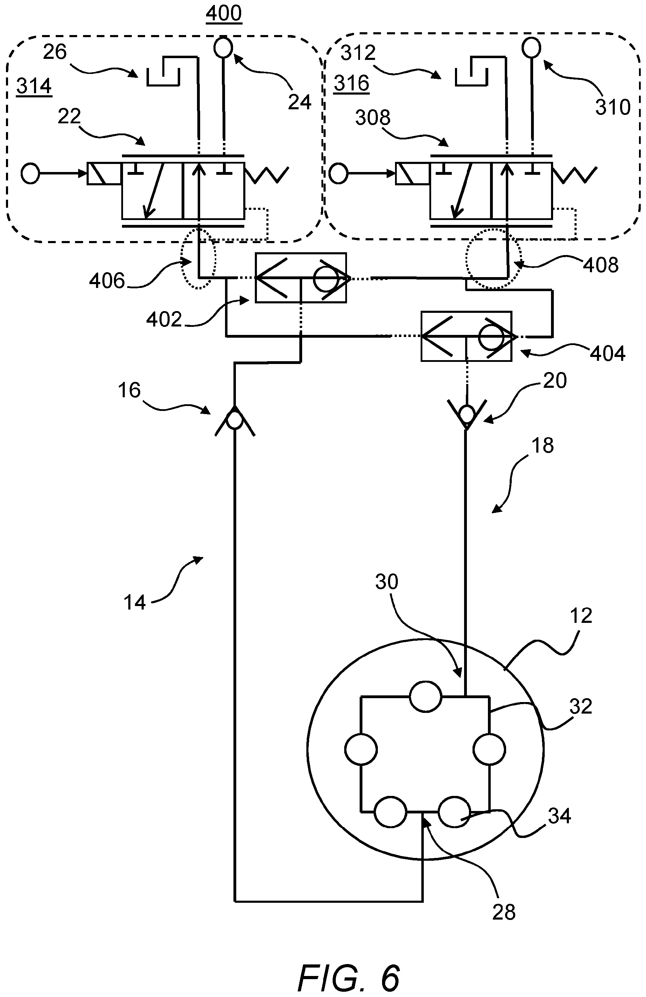

A fourth example aircraft braking system 400 used to actuate the brakes is illustrated schematically in Figure 6. The fourth example aircraft braking system 400 is generally the same as the third example aircraft braking system 300 of Figure 5, save that the fourth example aircraft braking system 400 comprises a first shuttle valve 402 and a second shuttle valve 404. Again, like reference numerals are used for sake of clarity. The first shuttle valve 402 is fluidically coupled to the inlet line 14, and to each of the servo valve 22 and the further servo valve 308. Similarly, the second shuttle valve 404 is fluidically coupled to the outlet line 18, and to each of the servo valve 22 and the further servo valve 308. A first fluid volume 406 between the servo valve 22 and a junction between the first 402 and second 404 shuttle valves, and a second fluid volume 408 between the further servo valve 308 and a junction between the first 402 and second 404 shuttle valves, define a total volume that is less than a maximal volume of hydraulic fluid that can be displaced along the outlet line 18 in response to deactivation of the hydraulic actuator 12. Such an arrangement may again provide redundancy, whilst also enabling flow along the inlet 14 and outlet 18 lines to pass through separate shuttle valves.

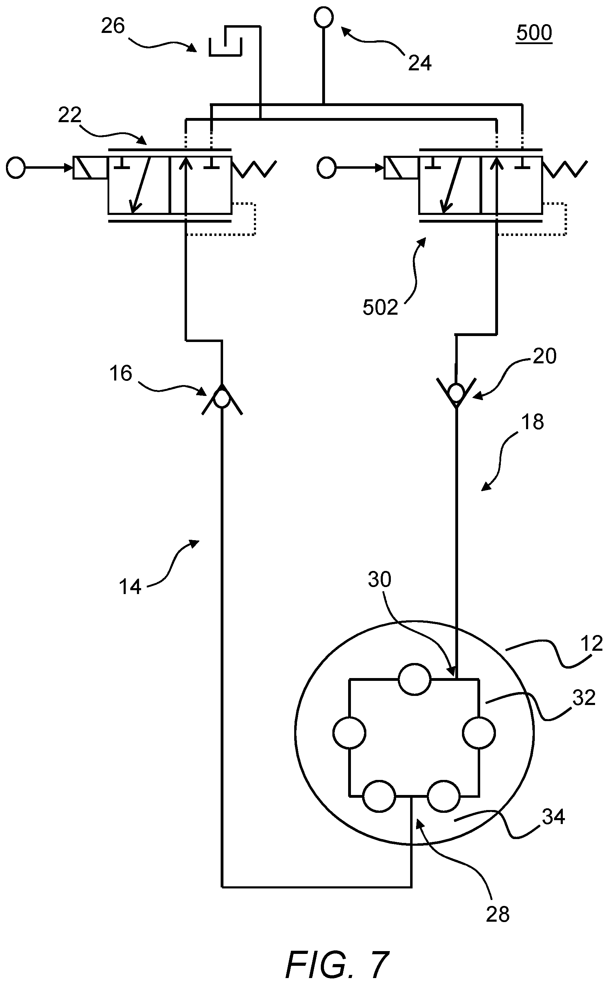

A fifth example aircraft braking system 500 used to actuate the brakes is illustrated schematically in Figure 7. The fifth example aircraft braking system 500 is substantially the same as the first example aircraft braking system 10 of Figure 2, save for the absence of the common conduit 21, the presence of a further servo valve 502, and the following. Like reference numerals are used in Figure 6 for sake of clarity. The servo valve 22 is fluidically coupled to the inlet line 14, and to each of the pressure source 24 and the reservoir 26. The further servo valve 502 is fluidically coupled to the outlet line 18, and to each of the pressure source 24 and the reservoir 26. Presence of a servo valve on each line enables hydraulic fluid to be recirculated even where braking is not active.

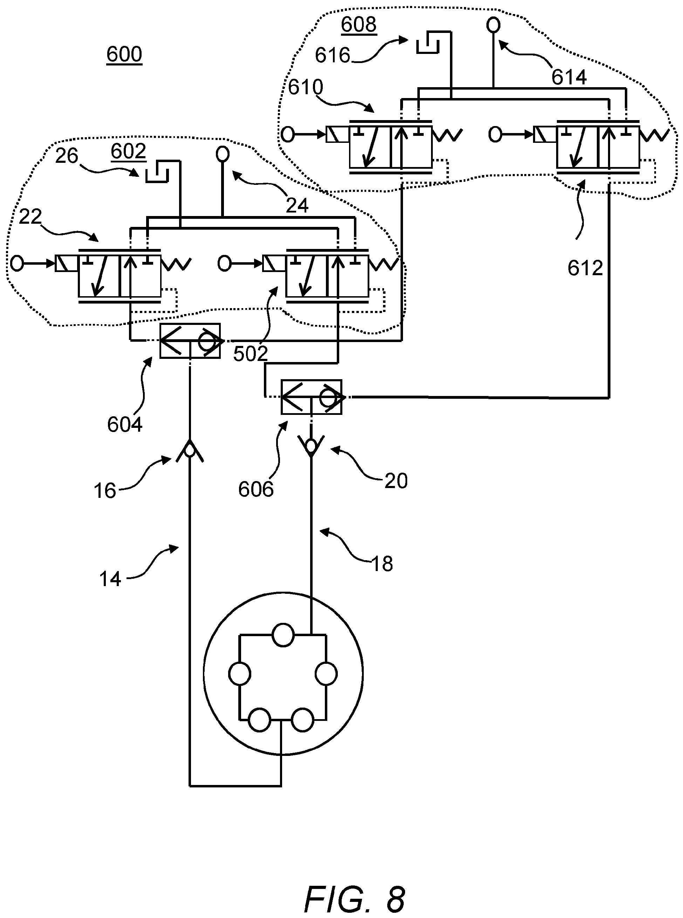

A sixth example aircraft braking system 600 used to actuate the brakes is illustrated schematically in Figure 8, where like reference numerals are used for sake of clarity. The sixth example aircraft braking system 600 is similar to the fifth example aircraft braking system 500, save for the following. The servo valve 22, the further servo valve 502, the pressure source 24, and the reservoir 26 form a first hydraulic system 602. The servo valve 22 can be considered a first servo valve, and the further servo valve 502 can be considered a second servo valve. The sixth example aircraft braking system 600 comprises a first shuttle valve 604, a second shuttle valve 606, and a second hydraulic system 608. The second hydraulic system 608 comprises a third servo valve 610, a fourth servo valve 612, a further pressure source 614, and a further reservoir 616. The third servo valve 610 and the fourth servo valve 612 are each fluidically connected to the further pressure source 614 and the further reservoir 616.

The first shuttle valve 604 is fluidically connected to the inlet line 14, and to each of the first servo valve 22 and the third servo valve 610. The second shuttle valve 606 is fluidically connected to the outlet line 18, and to each of the second servo valve 502 and the fourth servo valve 612. The first 604 and second 606 shuttle valves are able to select between the first 602 and second 608 hydraulic systems to provide redundancy, whilst also enabling flow along the inlet 14 and outlet 18 lines to pass through separate shuttle valves. Furthermore, the servo valves 22,502,610,612 enable active recirculation of hydraulic fluid when either of the first 602 and second 608 hydraulic systems are connected to the inlet 14 and outlet 18 lines.

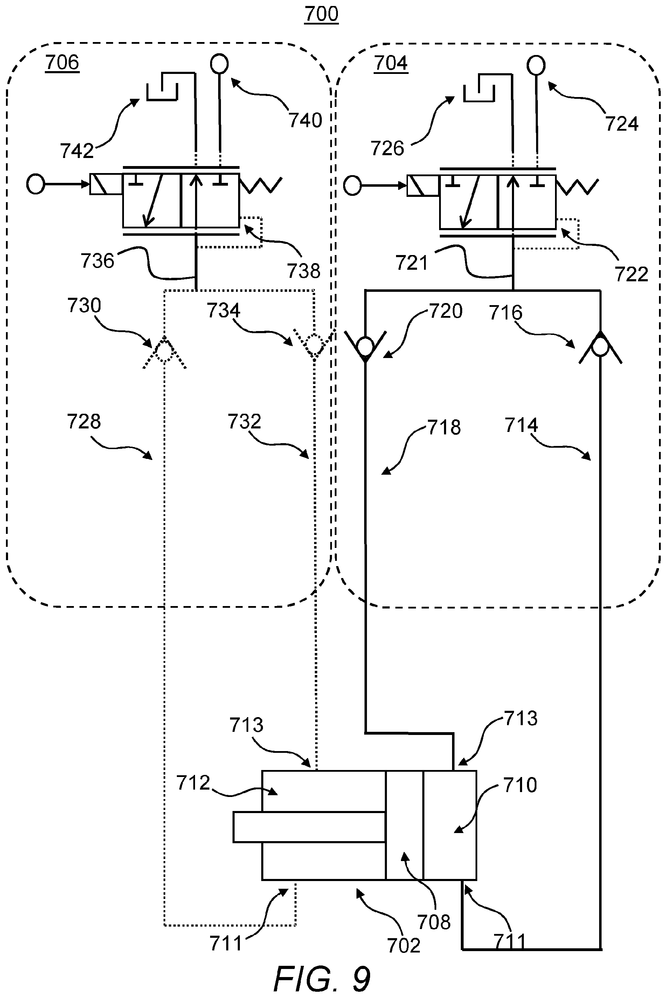

A seventh example aircraft braking system 700 used to actuate the brakes is illustrated schematically in Figure 9. The seventh example aircraft braking system 700 comprises a hydraulic brake actuator 702, a first hydraulic system 704, and a second hydraulic system 706. The hydraulic brake actuator 702 is a double-acting hydraulic actuator, and comprises a piston 708, with an extension chamber 710 and a retraction chamber 712 disposed either side of a head of the piston 708. Each of the extension chamber 710 and the retraction chamber 712 comprises an inlet port 711 and an outlet port 713.

The first hydraulic system 704 comprises a first inlet line 714, a first one-way valve 716, a first outlet line 718, a second one-way valve 720, a first common conduit 721, a first servo valve 722, a first pressure source 724, and a first reservoir 726. The first inlet line 714 is fluidically connected to the inlet port 711 of the extension chamber 710 and to the first common conduit 721. The first one-way valve 716 is disposed along the first inlet line 714, and configured such that the first one-way valve 716 allows fluid flow in a direction towards the extension chamber 710. The first outlet line 718 is fluidically connected to the outlet port 713 of the extension chamber 710 and to the first common conduit 721. The second one-way valve 720 is disposed along the first outlet line 718, and configured such that the second one-way valve 720 allows fluid flow in a direction away from the extension chamber 710.

The first servo valve 722 is fluidically connected to the first common conduit 721, and to the first pressure source 724 and the first reservoir 726.

The second hydraulic system 706 comprises a second inlet line 728, a third one-way valve 730, a second outlet line 732, a fourth one-way valve 734, a second common conduit 736, a second servo valve 738, a second pressure source 740, and a second reservoir 742. The second inlet line 728 is fluidically connected to the inlet port 711 of the retraction chamber 712 and to the second common conduit 736. The third one-way valve 730 is disposed along the second inlet line 728, and configured such that the third one-way valve 730 allows fluid flow in a direction towards the retraction chamber 712. The second outlet line 732 is fluidically connected to the outlet port 713 of the retraction chamber 712 and to the second common conduit 736. The fourth one-way valve 734 is disposed along the second outlet line 732, and configured such that the fourth one-way valve 734 allows fluid flow in a direction away from the retraction chamber 712.

The second servo valve 738 is fluidically connected to the second common conduit 736, and to the second pressure source 738 and the second reservoir 740.

In use, each of the first hydraulic system 704 and the second hydraulic system 706 operates in a similar manner to that described above in relation to the first example aircraft braking system 10 described above. In such a manner the first hydraulic system 704 can be utilised to recirculate hydraulic fluid through the extension chamber 710, and the second hydraulic system 706 can be utilised to recirculate hydraulic fluid through the retraction chamber 712. When hydraulic fluid flows into the extension chamber 710 along the first inlet line 714, hydraulic fluid is allowed to flow out of the retraction chamber 712 along the second outlet line 732. Similarly, when hydraulic fluid flows into the retraction chamber 712 along the second inlet line 730, hydraulic fluid is allowed to flow out of the extension chamber 710 along the first outlet line 718.

In each of the embodiments described above, hydraulic fluid within a chamber or flow path of a hydraulic brake actuator can be recirculated, such that hydraulic fluid within the chamber or flow path is refreshed in use.

Although described above in the context of a hydraulic brake actuator, it will be appreciated that the concepts described herein can be applied to other appropriate hydraulic actuators, particularly those utilised on aircraft. For example, the concepts discussed herein may be applied to hydraulic actuators of an LGERS of an aircraft.

It is to be noted that the term "or" as used herein is to be interpreted to mean "and/or", unless expressly stated otherwise.

## Claims

1. An aircraft system comprising:
a hydraulic actuator;
an inlet line for supplying hydraulic fluid to the hydraulic actuator;
an outlet line for removing hydraulic fluid from the hydraulic actuator;
a first one-way valve configured to allow fluid flow along the inlet line in a direction toward the hydraulic actuator; and
a second one-way valve configured to allow fluid flow along the outlet line in a direction away from the hydraulic actuator.

2. The aircraft system according to Claim 1, wherein the hydraulic actuator comprises an inlet port in fluid communication with the inlet line, and an outlet port in fluid communication with the outlet line, the inlet port is located on a first side of the hydraulic actuator, and the outlet port is located on a second side of the hydraulic actuator, the second side of the hydraulic actuator different from the first side of the hydraulic actuator.

3. The aircraft system according to Claim 2, wherein the first side of the hydraulic actuator is configured such that, when the aircraft system is mounted within an aircraft in use, and with the aircraft located on a horizontal surface, the first side of the hydraulic actuator is located below the second side of the hydraulic actuator.

4. The aircraft system according to Claim 2 or Claim 3, wherein the hydraulic actuator is configured such that, when the aircraft system is mounted within an aircraft in use, and with the aircraft located on a horizontal surface, the inlet port is located at a bottom of the hydraulic actuator, and the outlet port is located at a top of the hydraulic actuator.

5. The aircraft system according to any one of the preceding claims, wherein the aircraft system is configured such that hydraulic fluid flowing along the inlet line toward the hydraulic actuator causes activation of the hydraulic actuator, and such that hydraulic fluid flowing along the outlet line away from the hydraulic actuator causes deactivation of the hydraulic actuator.

6. The aircraft system according to any one of the preceding claims, wherein the aircraft system comprises a control valve for controlling flow of hydraulic fluid along the inlet line, and optionally wherein the inlet line and the outlet line are fluidically coupled to the control valve.

7. The aircraft system according to Claim 6, wherein the inlet line and the outlet line are coupled to the control valve by a common conduit, and optionally wherein the common conduit has a first volume, the aircraft system is configured such that a second, maximal, volume of hydraulic fluid is able to be displaced along the outlet line by the hydraulic actuator in a single actuation, and the first volume is less than the second volume.

8. The aircraft system according to any one of the preceding claims, wherein the hydraulic actuator comprises a first chamber and a first piston movable in response to movement of hydraulic fluid within the first chamber, the inlet line and the outlet line in fluid communication with the first chamber, and wherein;
the hydraulic actuator comprises a second chamber and a second piston movable in response to movement of hydraulic fluid within the second chamber; and
the aircraft system comprises:
a further inlet line for supplying hydraulic fluid to the second chamber;
a further outlet line for removing hydraulic fluid from the second chamber;
a first further one-way valve configured to allow fluid flow along the further inlet line in a direction toward the second chamber; and
a second further one-way valve configured to allow fluid flow along the outlet line in a direction away from the second chamber.

9. The aircraft system according to any one of Claims 1 to 8, wherein the aircraft system comprises:
a first hydraulic system comprising a first pressure source, a first reservoir, and a first control valve for controlling flow of hydraulic fluid from the first pressure source to the inlet line, and for controlling flow of hydraulic fluid from the outlet line to the first reservoir;
a second hydraulic system comprising a second pressure source, a second reservoir, and a second control valve for controlling flow of hydraulic fluid from the first pressure source to the inlet line, and for controlling flow of hydraulic fluid from the outlet line to the first reservoir; and
a selector for selecting which of the first and second hydraulic systems is in fluid communication.

10. The aircraft system according to any one of Claims 1 to 5, wherein the aircraft system comprises a first control valve for controlling flow of hydraulic fluid along the inlet line, and a second control valve for controlling flow of hydraulic fluid along the outlet line.

11. The aircraft system according to Claim 10, wherein the aircraft system comprises:
a first hydraulic system comprising a first pressure source in fluid communication with the first control valve, a first reservoir in fluid communication with the second control valve, and the first and second control valves;
a second hydraulic system comprising a second pressure source, a second reservoir, a first further control valve for controlling flow hydraulic fluid from the second pressure source to the inlet line, and a second further control valve for controlling flow of hydraulic fluid from the outlet line to the second reservoir;
a first selector valve for selecting which of the first control valve and the first further control valve is in fluid communication with the inlet line; and
a second selector valve for selecting which of the second control valve and the second further control valve is in fluid communication with the outlet line.

12. The aircraft system according to any one of Claims 1 to 7, wherein the hydraulic actuator comprises a first chamber, a second chamber, and a piston movable in response to hydraulic fluid flowing through the first and second chambers, wherein the inlet line and the outlet line are in fluid communication with the first chamber, and the aircraft system comprises:
a further inlet line for supplying hydraulic fluid to the second chamber;
a further outlet line for removing hydraulic fluid from the second chamber;
a first further one-way valve configured to allow fluid flow along the further inlet line in a direction toward the second chamber; and
a second further one-way valve configured to allow fluid flow along the outlet line in a direction away from the second chamber.

13. The aircraft system according to any one of the preceding claims, wherein the aircraft system is an aircraft brake system, and the hydraulic actuator is a hydraulic brake actuator, and optionally wherein the aircraft system comprises an aircraft brake, and the aircraft system is configured such that hydraulic fluid flowing along the inlet line toward the hydraulic brake actuator causes activation of the hydraulic brake actuator such that a level of braking force applied by the aircraft brake increases, and such that hydraulic fluid flowing along the outlet line away from the hydraulic brake actuator causes deactivation of the hydraulic brake actuator such that the level of braking force applied by the aircraft brake decreases.

14. A hydraulic actuator for an aircraft system, the hydraulic actuator comprising an inlet port for fluid communication with an inlet line for supplying hydraulic fluid to the hydraulic actuator, and an outlet port for fluid communication with an outlet line for removing hydraulic fluid from the hydraulic actuator, the inlet port located on a first side of the hydraulic actuator, and the outlet port located on a second side of the hydraulic actuator, the second side of the hydraulic actuator different from the first side of the hydraulic actuator. and optionally wherein the first side of the hydraulic actuator is configured such that, when the hydraulic actuator is mounted within an aircraft in use, and with the aircraft located on a horizontal surface, the first side of the hydraulic actuator is located below the second side of the hydraulic actuator.

15. An aircraft comprising the aircraft system according to any one of Claims 1 to 13, or the hydraulic actuator according to Claims 14.
